# EUROPEAN PATENT SPECIFICATION

(11) **EP 3 721 423 B1**
(45) Date of publication and mention of the grant of the patent: **21.08.2024**
(21) Application number: 17934195.3
(22) Date of filing: 08.12.2017
(51) Int. Cl.: H04L 9/40, G08G 1/14, G08G 1/01, G06Q 10/04, G07B 15/02

(54) **METHOD AND APPARATUS FOR PREVENTING SHARING VEHICLE PARKING CONGESTION**
VERFAHREN UND VORRICHTUNG ZUR VERHINDERUNG VON ÜBERLASTUNG BEIM PARKEN VON GEMEINSAM GENUTZTEN FAHRZEUGEN
PROCÉDÉ ET APPAREIL PERMETTANT D'EMPÊCHER UN ENCOMBREMENT DE STATIONNEMENT DE VÉHICULE DE PARTAGE

(43) Date of publication of application: 14.10.2020
(73) Proprietor: Telefonaktiebolaget LM Ericsson (publ), 164 83 Stockholm (SE)
(72) Inventor: WANG, Zhancang, Beijing 100102 (CN); HE, Yingjiao, Shanghai 200335 (CN); GU, Hui, Shanghai 200335 (CN)
(74) Representative: Ericsson
(86) International application number: PCT/CN2017/115241
(87) International publication number: WO 2019/109341

(56) References cited:
- EP-A1- 3 054 721
- CN-A- 103 177 603
- CN-A- 105 355 082
- CN-A- 106 056 967
- CN-A- 107 230 376
- CN-U- 201 853 364
- CN-U- 201 853 364
- US-A1- 2015 130 641
- US-A1- 2017 150 307

## Description

### Technical Field

Embodiments of the disclosure generally relate to wireless communication, and, more particularly, to method and apparatus for preventing sharing vehicle parking congestion.

### Background

A vehicle-sharing system is a service in which vehicles such as bicycles and cars are available for shared use to individuals for a price. Vehicle-sharing system allows people to rent a vehicle from site/region A and return it at site/region B. However, the phenomenon of the vehicles of random parking is also more prominent, which may lead to a sharing vehicles parking jam/congestion problem. Therefore, it would be desirable to provide a solution for preventing sharing vehicle parking congestion. US2015130641A1 discloses a smart parking system, and in particular, a multi-hop wireless mesh network that can estimate an occupancy map at a parking facility. CN201853364U discloses a vehicle parking system based on a wireless sensor network which comprises a plurality of wireless sensor network nodes arranged in a parking lot and a system server used for receiving and processing information collected by the wireless sensor network nodes. US2017150307A1 discloses a system which utilizes information from cellular networks to determine that a movement transition e.g., a transition from walking to driving, occurred at a parking post and that the parking spot is newly available. EP3054721A1 discloses a system for determining a traffic adjustment of a traffic device based on a network state.

### Summary

This summary is provided to introduce a selection of concepts in a simplified form that are further described below in detailed description. This summary is not intended to identify key features or essential features of the claimed subject matter, nor is it intended to be used to limit the scope of the claimed subject matter.

The present invention is directed to subject-matter as disclosed by the appended claims.

These and other objects, features and advantages of the disclosure will become apparent from the following detailed description of illustrative embodiments thereof, which are to be read in connection with the accompanying drawings.

### Brief Description of the Drawings

Fig.1 depicts a schematic system, in which some embodiments of the present disclosure can be implemented;
Fig.2 is a flow chart depicting a method according to an embodiment of the present disclosure;
Fig.3 is a flow chart depicting a method according to another embodiment of the present disclosure;
Fig.4 is a flow chart depicting a method according to another embodiment of the present disclosure;
Fig.5 is a flow chart depicting a method according to another embodiment of the present disclosure;
Fig.6 is a flow chart depicting a method according to another embodiment of the present disclosure;
Fig.7 is a flow chart depicting a method according to another embodiment of the present disclosure;
Fig.8 is a flow chart depicting a method according to another embodiment of the present disclosure;
Fig.9 is a flow chart depicting a method according to another embodiment of the present disclosure;
Fig. 10 is a flow chart depicting a method according to another embodiment of the present disclosure;
Fig.11 is a flow chart depicting a method according to another embodiment of the present disclosure;
Fig. 12 is a flow chart depicting a method according to another embodiment of the present disclosure;
Fig. 13 is a flow chart depicting a method according to another embodiment of the present disclosure;
Fig.14 is a block diagram illustrating an apparatus according to an embodiment of the disclosure;
Fig.15 is a block diagram illustrating an apparatus according to another embodiment of the disclosure;
Fig.16 is a block diagram illustrating an apparatus according to another embodiment of the disclosure;
Fig.17 shows a network topology and node definition according to an embodiment of the disclosure;
Fig.18 shows a schematic diagram of re-assigning incoming sharing vehicles for congestion prevention according to an embodiment of the disclosure; and
Fig.19 is a flow chart depicting a method for sharing vehicle parking congestion prevention according to another embodiment of the present disclosure.

### Detailed Description

For the purpose of explanation, details are set forth in the following description in order to provide a thorough understanding of the embodiments disclosed. It is apparent, however, to those skilled in the art that the embodiments may be implemented without these specific details or with an equivalent arrangement.

As used herein, the term "wireless network" refers to a network following any suitable communication standards, such as LTE-Advanced (LTE-A), LTE, Wideband Code Division Multiple Access (WCDMA), High-Speed Packet Access (HSPA), radio frequency (RF) received signal strength indication (RSSI) level based wireless technology and so on. Furthermore, the communications between a terminal device and a network device in the wireless network may be performed according to any suitable generation communication protocols, including, but not limited to, Global System for Mobile Communications (GSM), Universal Mobile Telecommunications System (UMTS), Long Term Evolution (LTE), and/or other suitable the first generation (1G), the second generation (2G), 2.5G, 2.75G, the third generation (3G), the fourth generation (4G), 4.5G, the future fifth generation (5G) communication protocols, wireless local area network (WLAN) standards, such as the IEEE 802.11 standards; and/or any other appropriate wireless communication standard, such as the Worldwide Interoperability for Microwave Access (WiMax), Bluetooth, and/or ZigBee standards, and/or any other protocols either currently known or to be developed in the future.

The term "network device" refers to a device in a wireless network via which a terminal device accesses the network and receives services therefrom. The network device refers a base station (BS), an access point (AP), or any other suitable device in the wireless network. The BS may be, for example, a node B (NodeB or NB), an evolved NodeB (eNodeB or eNB), or gNB, a Remote Radio Unit (RRU), a radio header (RH), a remote radio head (RRH), a relay, a low power node such as a femto, a pico, and so forth. Yet further examples of the network device may include multistandard radio (MSR) radio equipment such as MSR BSs, network controllers such as radio network controllers (RNCs) or base station controllers (BSCs), base transceiver stations (BTSs), transmission points, transmission nodes. More generally, however, the network device may represent any suitable device (or group of devices) capable, configured, arranged, and/or operable to enable and/or provide a terminal device access to the wireless network or to provide some service to a terminal device that has accessed the wireless network.

The term "terminal device" refers to any end device that can access a wireless network and receive services therefrom. By way of example and not limitation, the terminal device refers to a mobile terminal, user equipment (UE), or other suitable devices. The UE may be, for example, a Subscriber Station (SS), a Portable Subscriber Station, a Mobile Station (MS), or an Access Terminal (AT). The terminal device may include, but not limited to, portable computers, image capture terminal devices such as digital cameras, gaming terminal devices, music storage and playback appliances, a mobile phone, a cellular phone, a smart phone, voice over IP (VoIP) phones, wireless local loop phones, a tablet, a wearable device, a personal digital assistant (PDA), portable computers, desktop computer, image capture terminal devices such as digital cameras, gaming terminal devices, music storage and playback appliances, wearable terminal devices, vehicle-mounted wireless terminal devices, wireless endpoints, mobile stations, laptop-embedded equipment (LEE), laptop-mounted equipment (LME), USB dongles, smart devices, wireless customer-premises equipment (CPE) and the like. In the following description, the terms "terminal device", "terminal", "user equipment" and "UE" may be used interchangeably. As one example, a terminal device may represent a UE configured for communication in accordance with one or more communication standards promulgated by the 3rd Generation Partnership Project (3GPP), such as 3GPP's GSM, UMTS, LTE, and/or 5G standards. As used herein, a "user equipment" or "UE" may not necessarily have a "user" in the sense of a human user who owns and/or operates the relevant device. In some embodiments, a terminal device may be configured to transmit and/or receive information without direct human interaction. For instance, a terminal device may be designed to transmit information to a network on a predetermined schedule, when triggered by an internal or external event, or in response to requests from the wireless network. Instead, a UE may represent a device that is intended for sale to, or operation by, a human user but that may not initially be associated with a specific human user.

As used herein, a downlink, DL transmission refers to a transmission from the network device to a terminal device, and an uplink, UL transmission refers to a transmission in an opposite direction.

References in the specification to "one embodiment," "an embodiment," "an example embodiment," and the like indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

It shall be understood that although the terms "first" and "second" etc. may be used herein to describe various elements, these elements should not be limited by these terms. These terms are only used to distinguish one element from another. For example, a first element could be termed a second element, and similarly, a second element could be termed a first element, without departing from the scope of example embodiments. As used herein, the term "and/or" includes any and all combinations of one or more of the associated listed terms.

The terminology used herein is for the purpose of describing particular embodiments only and is not intended to be liming of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof.

In the following description and claims, unless defined otherwise, all technical and scientific terms used herein have the same meaning as commonly understood by one of ordinary skills in the art to which this disclosure belongs.

Now some exemplary embodiments of the present disclosure will be described below with reference to the figures.

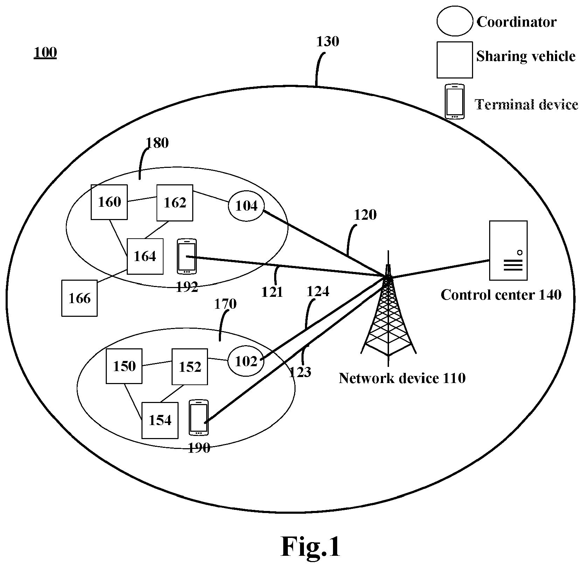

Fig.1 depicts a schematic system, in which some embodiments of the present disclosure can be implemented. As shown in Fig.1, the system 100 comprises a network device 110 such as a cellular base station or a radio access point (such as Wi-Fi Access Point). The network device 110 may refer to a function element on the network side as compared to a terminal device or UE. For example, the network device 110 may comprise an eNB, a Home eNode B, a femto BS, a pico BS, gNB, a radio access point or any other node capable to serve terminal devices such as sharing vehicles and UEs in the system 100. It is well known that a cellular radio system may comprise a network of radio cells each served by a transmitting station, known as a cell site or base transceiver station. The radio network provides wireless communications service for a plurality of transceivers (in most cases mobile). The network of network devices working in collaboration allows for wireless service which is greater than the radio coverage provided by a single network device. The individual network device may be connected by another network (in many cases a wired network, not shown), which includes additional controllers for resource management and in some cases access to other network systems (such as the Internet) or metropolitan area networks (MANs). The circle 130 schematically indicates a coverage range of the network device 110.

As shown in Fig.1, the system 100 may further comprise one or more sharing vehicles 150, 152, 154, 160, 162, 164 and 166. The sharing vehicles may comprise bicycle, electric bicycle, automobile, hybrid electric vehicle. The sharing vehicles may be equipped with a sensor such as positioning sensor and a communication module. The sharing vehicles in an ad-hoc mesh network may serve as a router, so the information could be passed from one sharing vehicle to another sharing vehicle. For each parking region 170 and 180, there could be deployed at least one coordinator 104 and 102. For example, the sharing vehicles, UE or wireless access point may act as the coordinator. The coordinator may be a fixed access point deployed at the parking lot/region. The coordinator can act as a gateway which can connect to the network device 110. In addition, the gateway role can be ignored if no gateway device is available from the wireless network. The sharing vehicles 150, 152, 154 and the coordinator 102 in a parking lot/region 170 may form a parking wireless network and the sharing vehicles 160, 162, 164 and the coordinator 104 in another parking lot/region 180 may form another parking wireless network. The sharing vehicle 166 is an incoming sharing vehicle which may not join the parking wireless network. A node such as the sharing vehicles 164 which can detect the incoming sharing vehicle 166 can be referred as a first node of the wireless network herein. The parking wireless network may be an ad-hoc mesh network, WLAN, or other suitable wireless network.

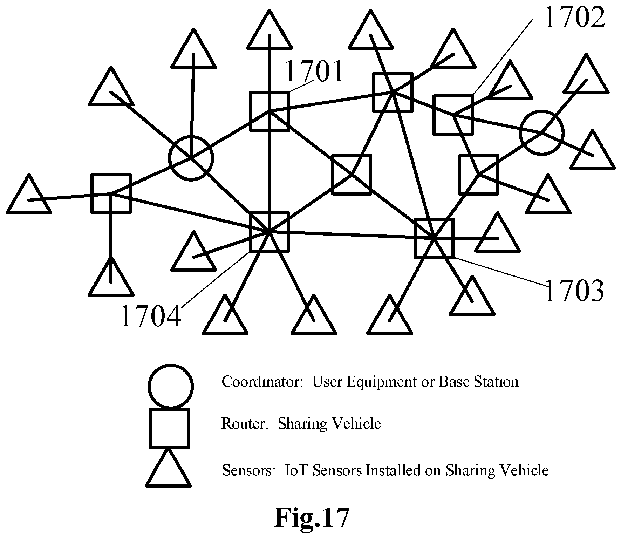

Fig.17 shows a network topology and node definition according to an embodiment of the disclosure. As shown in Figure 17, the parking wireless network may be an Ad Hoc mesh network, wherein different roles are assigned to internet of things (IoT) gateway, sharing vehicles and vehicle sensors as coordinator, router, and device respectively. Either UE or radio access network node could be used as coordinator role in the Ad Hoc mesh network. E.g. the mobile device of users of the sharing vehicle could be used as coordinator or IoT gateway to send the local parking info back to a backend control center for computing and decision making. At least one coordinator is located in the Ad Hoc mesh network so that the local mesh network information and status could be sent out to the backend control center. Multiple coordinators are allowed and with equalized authority to send back information of the Ad Hoc mesh network. The coordinator role can be ignored if no coordinator device is available from the Ad Hoc mesh network. The Ad Hoc mesh network may manage themselves and make local decision for incoming vehicles for congestion prevention. The backend control center can reject incoming vehicles that may cause injection and suggest them to be parked into nearest other Ad Hoc mesh network and guarantee that the nearest other Ad Hoc mesh network can accept parking sharing vehicles. There may be at least 4 reference nodes, representing boundary nodes 1701, 1702, 1703 and 1704 of the Ad Hoc mesh network, centering with the IoT gateway. It defines an area where has a maximum router node number limit. Therefore, it forms a detection system, with 1-4 nodes as "guards" to detect incoming sharing vehicles. The role of "guards" is not fixed to specific nodes, because the parking area is dynamically changed. Therefore, the "guards" role is dynamically triggered and re-assigned by a specific/predetermined event. For example, when one node is leaving the parking area or a new node is coming into the parking area. The boundary nodes may be re-defined when the Ad Hoc mesh network topology is changed in a reasonable manner. The detection system allows detection and positioning multiple incoming target nodes at the same time due to Ad Hoc mesh network topology applied.

As shown in Fig. 1, the system 100 may further comprise one or more terminal devices 190 and 192, each of which may operably communicate with the network device 110 such as a cellular base station through a wireless link 121 and 123. In addition, the terminal devices 190 and 192 can also communicate with the sharing vehicles. The terminal devices 190 and 192 can be fixed or moveable. Terminal devices 190 and 192 may include, but not limited to, cellular telephones, smart phones, and computers, whether desktop, laptop, or otherwise, as well as mobile devices or terminals such as cellular network UEs, handheld computers, personal digital assistants(PDAs), wearable devices, video cameras, set-top boxes, personal media devices, or any combinations of the foregoing, which may be provided with wireless communication functionality and run with any kind of operating system including, but not limited to, Windows, Linux, UNIX, Android, iOS and their variants. The terminal devices 190 and 192 can be used by the user of the sharing vehicle for renting and/or returning the sharing vehicle. In addition, the terminal devices 190 and 192 can act as the coordinators.

As shown in Fig.1, the system 100 may further comprise a control center 140, which may operably communicate with the terminal devices 190, 192, the coordinator 104, 102 and the sharing vehicles 150, 152, 154, 160, 162, 164 and 166 through the network device 110. The control center 140 may provide services associated with the sharing vehicle. For example, the control center 140 may get the sharing vehicle parking information, optimize the parking area according to the sharing vehicle distribution, and manage the sharing vehicle. The control center 140 can be implemented in form of hardware, software or their combination, including but not limited to, cloud computer, distributed computing system, virtual computer, smart phones, tablets, laptops, servers, thin clients, set-top boxes and PCs. The control center 140 may run with any kind of operating system including, but not limited to, Windows, Linux, UNIX, Android, iOS and their variants.

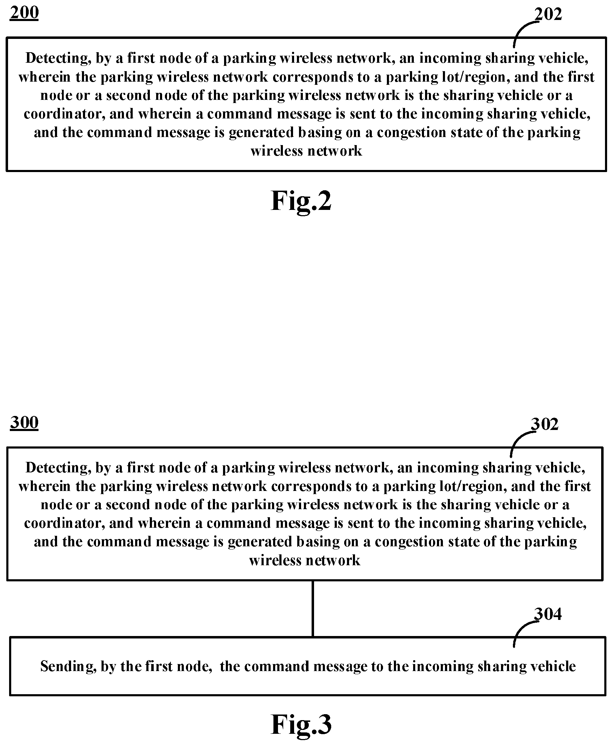

Fig.2 is a flow chart depicting a method 200 according to an embodiment of the present disclosure, which may be performed at an apparatus, wherein the apparatus may be provided in the sharing vehicle or the coordinator. As such, the apparatus may provide unit for accomplishing various parts of the method 200 as well as unit for accomplishing other processes in conjunction with other components.

As shown in Fig.2, the method 200 may start at block 202 where a first node of the parking wireless network detects an incoming sharing vehicle. The parking wireless network corresponds to a parking lot/region, and the first node or a second node of the parking wireless network is the sharing vehicle or the coordinator. A command message is sent to the incoming sharing vehicle, and the command message is generated basing on a congestion state of the parking wireless network.

For example, the sharing vehicles 150, 152, 154 and the coordinator 102 in the parking region 170 may form the parking wireless network such as ad hoc mesh network and each sharing vehicle and the coordinator 102 may be deemed as a node in the parking wireless network. The first node may be any node in the parking wireless network, such as a boundary node, the coordinator or a node with high battery capacity. The boundary node may be reassigned when a topology of the parking wireless network changes. In addition, the parking wireless network may comprise any number of the first nodes, such as 2, 3 and 4.

The first node may be assigned by the coordinator, the control center or the sharing vehicle. For example, if the coordinator or the control center determines that the sharing vehicle 164 is located at a boundary of the parking wireless network or has high battery capacity, then the coordinator or the control center may assign the sharing vehicle as the first node. In another example, the sharing vehicle may determine whether it is a boundary node by measuring directions of wireless signals transmitted by its neighbors. The role of the first node may be dynamically triggered and re-assigned by a specific/predetermined event. For example, the predetermined event may comprise that a sharing vehicle has left the parking region, a new sharing vehicle has parked in the parking region, the wireless network topology has changed, and the battery power of the current first node is lower than a predefined threshold.

The first node may detect the incoming sharing vehicle by measuring a wireless signal for discovery transmitted by the incoming sharing vehicle. The incoming sharing vehicle may transmit the wireless signal for discovery in any suitable ways. For example, the incoming sharing vehicle may transmit the wireless signal for discovery periodically; the user of the incoming sharing vehicle may perform a specific action, such as pressing a button on the vehicle, to cause the incoming sharing vehicle to transmit the wireless signal for discovery; or the incoming sharing vehicle has detected that the user of the incoming sharing vehicle has got off the incoming sharing vehicle, and then the incoming sharing vehicle transmits the wireless signal for discovery.

After detecting the incoming sharing vehicle, the command message may be sent to the incoming sharing vehicle in various ways. For example, the control center, the coordinator or the first node may generate the command message periodically or based on a predefined event, such as the changed topology of the parking wireless network, an event of the detected incoming sharing vehicle or the changed congestion judgment condition, or in response to a request for the command message. Then the command message may be sent to the incoming sharing vehicle by the control center, the coordinator or the first node, which will be described in detail in the following.

The congestion state may be determined by any suitable ways. For example, the congestion state may be determined based on a comparison of the number of current nodes in the parking wireless network and a threshold. The threshold may be determined by any suitable ways. For example, the threshold may be determined by performing big data analysis on the sharing vehicle parking information. The threshold may be determined based on sharing vehicle parking information and the rented sharing vehicle distribution. The threshold may be determined by performing joint optimization of parking lots/regions. In addition, the threshold may be dynamically adjusted. For example, the threshold may be adjusted for different times such as rush hour and non-rush hour. When an emergency (such as accident and traffic control) around the parking area results in that the vehicle cannot be parked in the parking area anymore, the threshold may be set as zero. An another example, if many vehicles are parked in a parking area and few vehicles are parked in a neighboring parking area, then the threshold for the parking area may be decreased and the threshold for the neighboring parking area may be increased.

In another example, the congestion state may be determined based on the history information of the parking region. For example, if the history information of the parking region indicates that the parking region is certainly congested during the morning from 8 to 9, then the congestion state may be determined as congestion during the morning from 8 to 9. The congestion state may be determined by the control center, coordinator or the first node, which will be described in detail in the following. By using the history information, the parking congestion can be predicted and prevention actions can be performed in advance. In addition, the congestion state may be set by the sharing vehicle service provider.

The command message may comprise any suitable information. For example, the command message may comprise at least one information of allowing the incoming sharing vehicle to be parked in the parking wireless network if the parking wireless network is not congested; rejecting the incoming sharing vehicle to be parked in the parking wireless network if the parking wireless network is congested; charging more fees for parking the incoming sharing vehicle in the parking wireless network if the parking wireless network is congested; requiring a user of the incoming sharing vehicle to perform a specific action if the incoming sharing vehicle is parked in the parking wireless network if the parking wireless network is congested; and information of at least one near other parking wireless network in which the incoming sharing vehicle can be parked if the parking wireless network is congested. As an example, if the parking wireless network is congested, the command message may comprise information of charging two times fees for parking the incoming sharing vehicle in the parking wireless network and/or requiring the user of the incoming sharing vehicle to display advertisement if the incoming sharing vehicle is parked in the parking wireless network.

When the incoming sharing vehicle receives the command message, it may output it to the user of the incoming sharing vehicle for example through a display or speaker, or send it to a wearable Bluetooth device of the user by a Bluetooth radio link, or any other suitable ways. Then the user may get the command message and perform an action such as parking the incoming sharing vehicle in the parking wireless network if the command message indicates that the parking wireless network is not congested. If the command message indicates that the parking wireless network is congested and the incoming sharing vehicle is rejected to be parked in the parking wireless network, then the incoming sharing vehicle can not be locked when the user attempts to park the sharing vehicle in the parking wireless network. If the command message indicates that the parking wireless network is congested and comprises information of charging two times fees for parking the incoming sharing vehicle in the parking wireless network, then the user will be charged two times fees when the user insists to park the sharing vehicle in the parking wireless network.

Fig.3 is a flow chart depicting a method 300 according to an embodiment of the present disclosure, which may be performed at an apparatus, wherein the apparatus may be provided in the sharing vehicle or the coordinator. For some parts which have been described in the above embodiments, detailed description thereof is omitted here for brevity.

In this embodiment, the command message is stored in the first node. For example, the control center and the coordinator may generate the command message periodically or based on a predefined event, such as the changed topology of the parking wireless network, an event of the detected incoming sharing vehicle or the changed congestion judgment condition. After generating the command message, the control center and the coordinator may send the command message to the first node which may store it. In addition, the command message may be updated by the control center or the coordinator.

As shown in Fig.3, the method 300 may start at block 302 where the first node of the parking wireless network detects an incoming sharing vehicle.

At block 304, the first node sends the command message to the incoming sharing vehicle. Since the command message is stored in the first node, the incoming sharing vehicle can receive the command message fast and the communication overhead can be reduced. This embodiment may be beneficial for the parking regions that are not congested for a large part of the day.

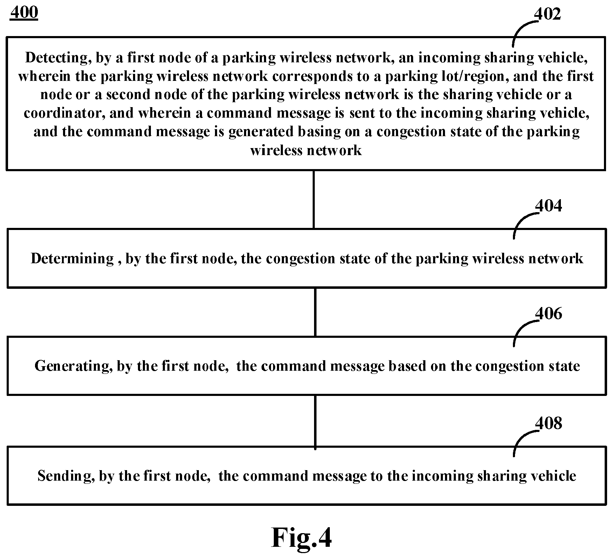

Fig.4 is a flow chart depicting a method 400 according to an embodiment of the present disclosure, which may be performed at an apparatus, wherein the apparatus may be provided in the sharing vehicle or the coordinator. For some parts which have been described in the above embodiments, detailed description thereof is omitted here for brevity.

As shown in Fig.4, the method 400 may start at block 402 where the first node of the parking wireless network detects the incoming sharing vehicle.

At block 404, the first node determines the congestion state of the parking wireless network. For example, the first node may determine the congestion state based on a comparison of the number of current nodes in the parking wireless network and a threshold or based on the history information of the parking region. As an example, the first node may maintain or obtain a topology of the parking wireless network, therefore the first node can determine the number of the sharing vehicles in the parking wireless network. The first node can compare the number of the sharing vehicles with a congestion threshold to determine the congestion state. As an example, if the first node determines that the number of the sharing vehicles is 50 and the congestion threshold is 40, then the first node can determine the congestion state is congested.

At block 406, the first node may generate the command message based on the congestion state. The command message may comprise any suitable information, for example the information as described above. For example, if the parking wireless network is not congested, the first node may generate the command message comprising information of allowing the incoming sharing vehicle to be parked in the parking wireless network. If the parking wireless network is congested, the information to be comprised in the command message may depend on a parking policy. For example, if the parking wireless network is congested, all the incoming sharing vehicles are rejected to be parked in the parking wireless network.

At block 408, the first node sends the command message to the incoming sharing vehicle.

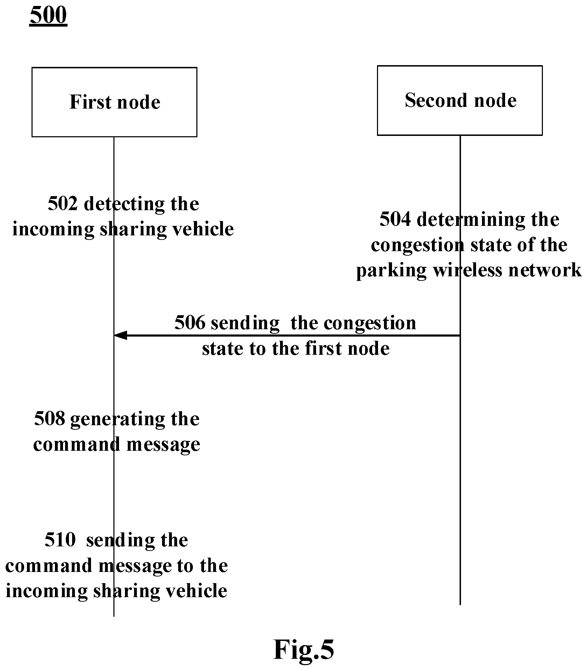

Fig.5 is a flow chart depicting a method 500 according to an embodiment of the present disclosure, which may be performed at an apparatus, wherein the apparatus may be provided in the sharing vehicle or the coordinator. For some parts which have been described in the above embodiments, detailed description thereof is omitted here for brevity.

As shown in Fig.5, the method 500 may start at block 502 where the first node of the parking wireless network detects the incoming sharing vehicle.

At block 504, the second node of the parking wireless network determines the congestion state of the parking wireless network. The second node may be a node different from the first node, such as the sharing vehicle or the coordinator. The second node may determine the congestion state periodically or in response to a request from the first node. For example, when the first node detects the incoming sharing vehicle, the first node may send a request for the congestion state to the second node. Then the second node may determine the congestion state. The second node may determine the congestion state based on a comparison of the number of current nodes in the parking wireless network and a threshold or based on the history information of the parking region as described above. For example, the second node may maintain the topology of the parking wireless network, therefore the second node can determine the number of the sharing vehicles in the parking wireless network. The second node can compare the number of the sharing vehicles with a congestion threshold to determine the congestion state. As an example, if the second node determines that the number of the sharing vehicles is 50 and the congestion threshold is 55, then the second node can determine the congestion state is not congested.

At 506, the second node sends the congestion state to the first node such that the first node generates the command message based on the congestion state at block 508 and sends the command message to the incoming sharing vehicle at block 510.

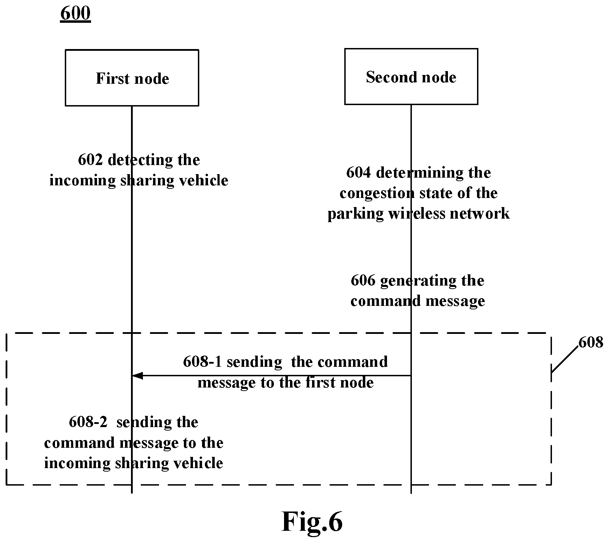

Fig.6 is a flow chart depicting a method 600 according to an embodiment of the present disclosure, which may be performed at an apparatus, wherein the apparatus may be provided in the sharing vehicle or the coordinator. For some parts which have been described in the above embodiments, detailed description thereof is omitted here for brevity. Blocks 602 and 604 are similar to blocks 502 and 504.

At block 606, the second node generates the command message based on the congestion state. For example, the second node may generate the command message periodically, based on the predefined event, or in response to a request from the first node. For example, when the first node detects the incoming sharing vehicle, the first node may send a request for the command message. Then the second node may generate the command message.

At block 608, the second node sends the command message to the incoming sharing vehicle. For example, the second node may send the command message to the first node at 608-1 such that the first node forward to the command message to the incoming sharing vehicle at 608-2. In addition, the second node may send directly the command message to the incoming sharing vehicle. In the latter case, the first node should send the identity of the detected incoming sharing vehicle to the second node.

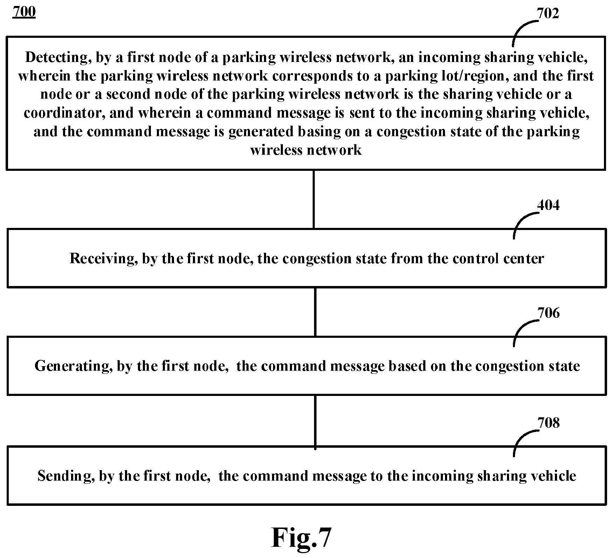

Fig.7 is a flow chart depicting a method 700 according to an embodiment of the present disclosure, which may be performed at an apparatus, wherein the apparatus may be provided in the sharing vehicle or the coordinator. For some parts which have been described in the above embodiments, detailed description thereof is omitted here for brevity.

In this embodiment, the congestion state of the parking wireless network is determined by the control center of the parking wireless network. For example, the control center may determine the congestion state based on a comparison of the number of current nodes in the parking wireless network and a threshold or based on the history information of the parking region as described above. The control center may determine the congestion state periodically or based on a predefined event such as the changed topology of the parking wireless network or the changed congestion judgment condition.

As shown in Fig.7, the method 700 may start at block 702 where the first node of the parking wireless network detects the incoming sharing vehicle.

At block 704, the first node receives the congestion state from the control center. For example, the congestion state may be sent to the first node by the control center periodically or in response to a request for the congestion state from the first node.

At block 706, the first node generate the command message based on the congestion state and sends the command message to the incoming sharing vehicle at block 708.

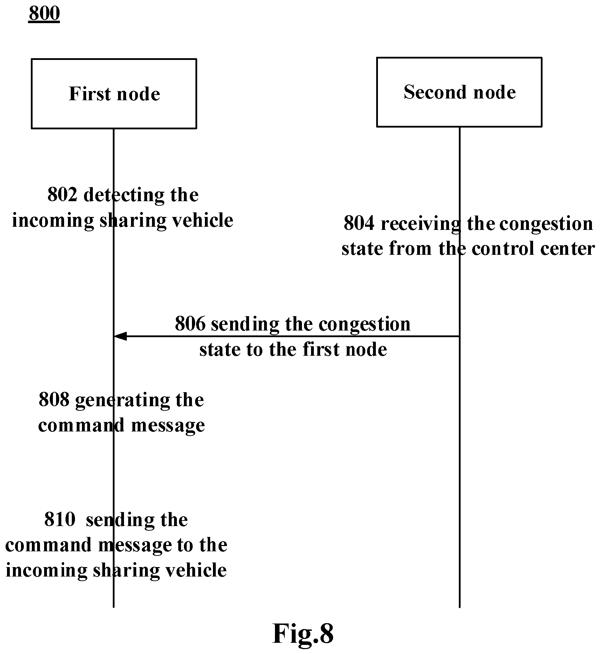

Fig.8 is a flow chart depicting a method 800 according to an embodiment of the present disclosure, which may be performed at an apparatus, wherein the apparatus may be provided in the sharing vehicle or the coordinator. For some parts which have been described in the above embodiments, detailed description thereof is omitted here for brevity. Block 802 is similar to block 702.

At block 804, the second node of the parking wireless network receives the congestion state from the control center. The second node may receive the congestion state periodically or in response to a request for the congestion state. For example, when the first node detects the incoming sharing vehicle, the first node may send a request for the congestion state to the second node. Then the second node may send the request to the control center and receive the congestion state from the control center.

At block 806, the second node sends the congestion state to the first node such that the first node generates the command message based on the congestion state at block 808 and sends the command message to the incoming sharing vehicle at block 810.

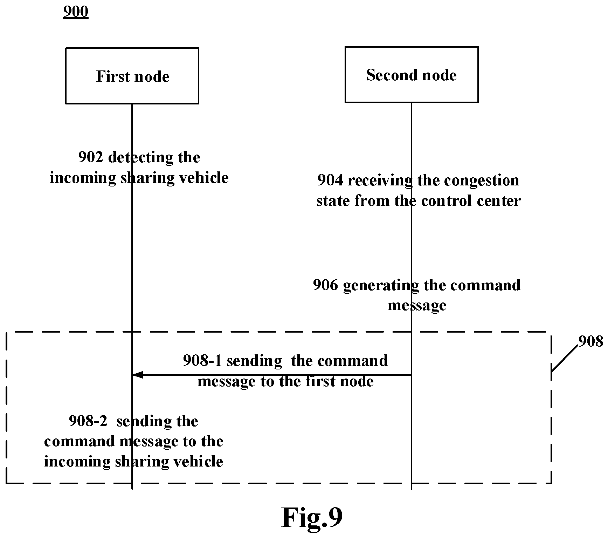

Fig.9 is a flow chart depicting a method 900 according to an embodiment of the present disclosure, which may be performed at an apparatus, wherein the apparatus may be provided in the sharing vehicle or the coordinator. For some parts which have been described in the above embodiments, detailed description thereof is omitted here for brevity. Blocks 902 and 904 are similar to blocks 802 and 804.

At block 906, the second node generates the command message based on the congestion state. For example, the second node may generate the command message periodically, based on the predefined event, or in response to a request from the first node. For example, when the first node detects the incoming sharing vehicle, the first node may send a request for the command message to the second node, and then the second node generates the command message.

At block 908, the second node sends the command message to the incoming sharing vehicle. Block 908 is similar to block 608.

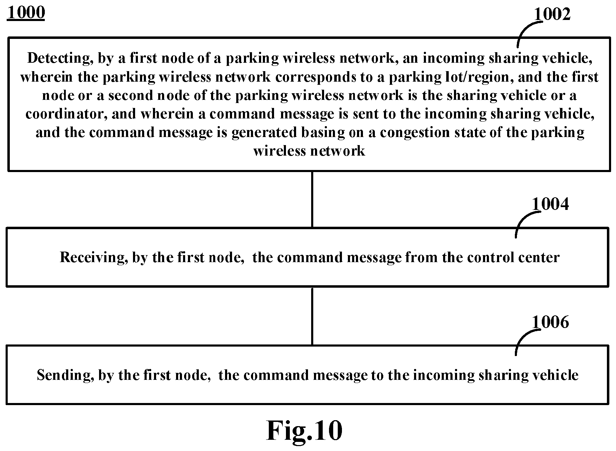

Fig.10 is a flow chart depicting a method 1000 according to an embodiment of the present disclosure, which may be performed at an apparatus, wherein the apparatus may be provided in the sharing vehicle or the coordinator. In this embodiment, the congestion state of the parking wireless network is determined by the control center of the parking wireless network and the command message is generated by the control center. For some parts which have been described in the above embodiments, detailed description thereof is omitted here for brevity.

At block 1002, the first node of the parking wireless network detects the incoming sharing vehicle.

At block 1004, the first node receives the command message from the control center. For example, the control center may send the command message periodically or in response to a request from the first node. For example, when the first node detects the incoming sharing vehicle, the first node may send a request for the command message to the control center.

At block 1006, the first node sends the command message to the incoming sharing vehicle.

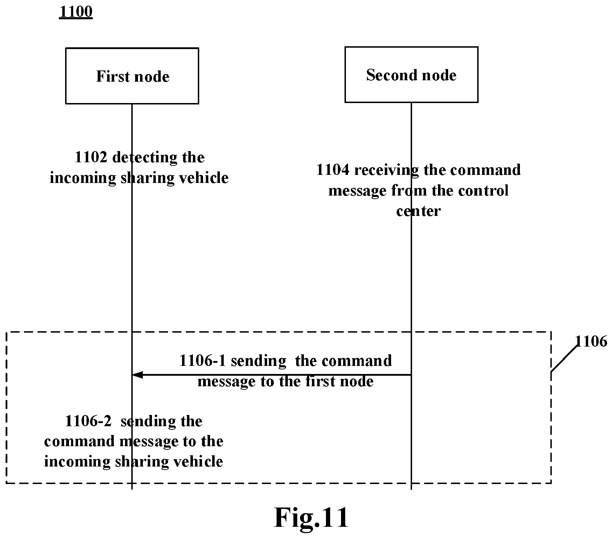

Fig.11 is a flow chart depicting a method 1100 according to an embodiment of the present disclosure, which may be performed at an apparatus, wherein the apparatus may be provided in the sharing vehicle or the coordinator. In this embodiment, the congestion state of the parking wireless network is determined by the control center of the parking wireless network and the command message is generated by the control center. For some parts which have been described in the above embodiments, detailed description thereof is omitted here for brevity.

At block 1102, the first node of the parking wireless network detects the incoming sharing vehicle.

At block 1104, the second node receives the command message from the control center. For example, the control center may send the command message periodically to the second node or in response to a request for the command message from the second node.

At block 1106, the second node sends the command message to the incoming sharing vehicle. Block 1106 is similar to block 608.

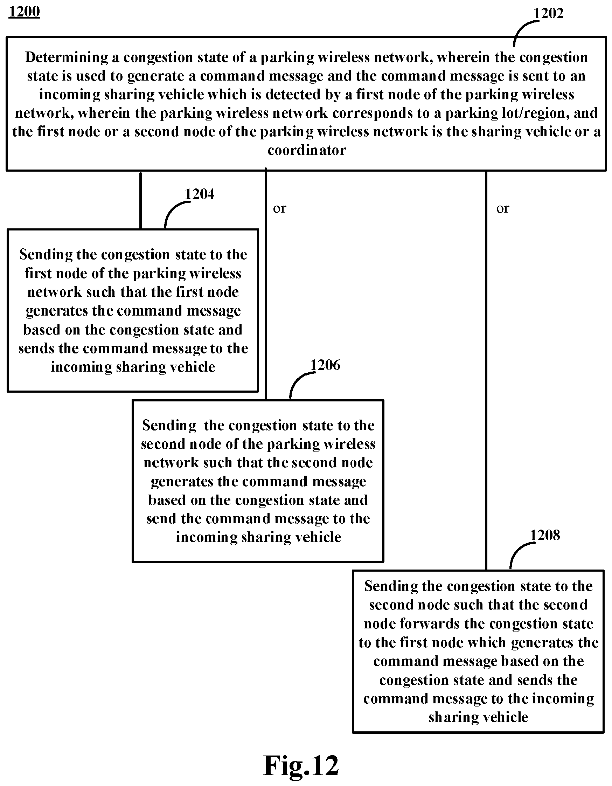

Fig.12 is a flow chart depicting a method 1200 according to an embodiment of the present disclosure, which may be performed at an apparatus, wherein the apparatus may be provided in the control center. As such, the apparatus may provide unit for accomplishing various parts of the method 1200 as well as unit for accomplishing other processes in conjunction with other components. For some parts which have been described in the above embodiments, detailed description thereof is omitted here for brevity.

As shown in Fig.12, the method 1200 may start at block 1202 where the control center determines a congestion state of the parking wireless network. The congestion state is used to generate a command message and the command message is sent to an incoming sharing vehicle which is detected by a first node of the parking wireless network. The parking wireless network corresponds to a parking lot/region, and the first node or a second node of the parking wireless network is the sharing vehicle or a coordinator. For example, the control center may determine the congestion state periodically, based on a predefined event, such as the changed topology of the parking wireless network, an event of the detected incoming sharing vehicle or the changed congestion judgment condition, or in response to a request for the congestion state.

At block 1204, the control center may send the congestion state to the first node of the parking wireless network such that the first node generates the command message based on the congestion state and sends the command message to the incoming sharing vehicle. For example, when the first node detects the incoming sharing vehicle, the first node may send a request for the congestion state to the control center. Then the control center may send the congestion state to the first node.

Alternatively, at block 1206, the control center may send the congestion state to the second node of the parking wireless network such that the second node generates the command message based on the congestion state and send the command message to the incoming sharing vehicle.

Alternatively, at block 1208, the control center may send the congestion state to the second node such that the second node forwards the congestion state to the first node which generates the command message based on the congestion state and sends the command message to the incoming sharing vehicle.

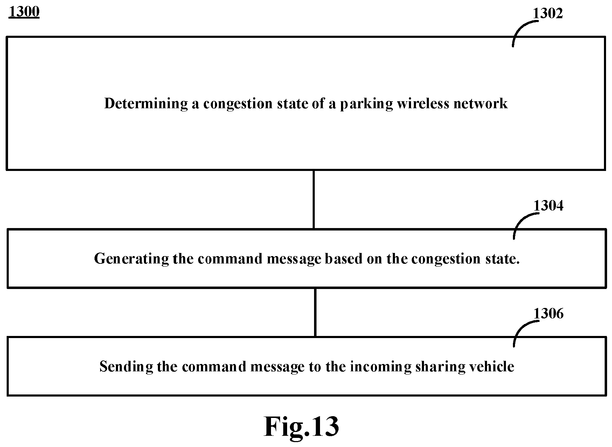

Fig.13 is a flow chart depicting a method 1300 according to an embodiment of the present disclosure, which may be performed at an apparatus, wherein the apparatus may be provided in the control center. For some parts which have been described in the above embodiments, detailed description thereof is omitted here for brevity.

As shown in Fig.13, the method 1300 may start at block 1302 where the control center determines the congestion state of the parking wireless network. Block 1302 is similar to block 1202.

At block 1304, the control center generates the command message based on the congestion state. For example, the control center may generate the command message periodically, based on a predefined event, such as the changed topology of the parking wireless network, an event of the detected incoming sharing vehicle or the changed congestion judgment condition, or in response to a request for the command message.

At block 1306, the control center sends the command message to the incoming sharing vehicle. For example, the control center may send the command message to the incoming sharing vehicle in response to a reception of a request for the command message. For example, when the first node detects the incoming sharing vehicle, the first node may send a request for the command message to the control center. Then the control center may send the command message to the first node which may send the command message to the incoming sharing vehicle. In addition, the control center sends the command message to the incoming sharing vehicle through the network device when the control center knows the identity of the incoming sharing vehicle.

In an embodiment, the control center may obtain sharing vehicle parking information and a rented sharing vehicle distribution. For example, the control center may collect and store the sharing vehicle parking information in a database. The sharing vehicle parking information may comprise the real time and/or history sharing vehicle parking information. The rented sharing vehicle distribution may be obtained from the locations of the rented sharing vehicles. Then the control center may optimize at least one parking area according to the sharing vehicle parking information and the rented sharing vehicle distribution. The optimization may comprise the optimization of the locations of parking areas, the optimization of the number of the parking areas, threshold optimization for the parking areas, etc. For example, when the sharing vehicle parking information indicates that a parking area will be congested and other parking areas around the parking area is not congested, then the control center may send a prompt message indicating that the parking area will be congested and other parking areas is not congested to the users of the sharing vehicles near the parking area. In addition, the control center may manage the sharing vehicles.

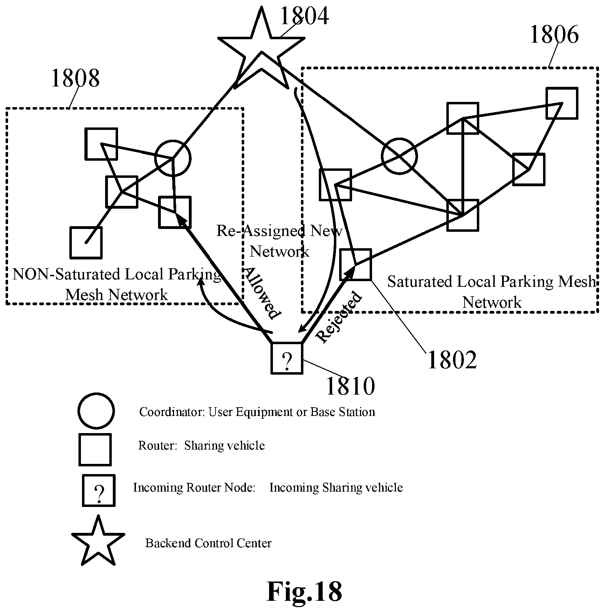

Fig. 18 shows a schematic diagram of re-assigning incoming sharing vehicles for congestion prevention according to an embodiment of the disclosure. For some parts which have been described in the above embodiments, detailed description thereof is omitted here for brevity.

As shown in Fig. 18, a boundary node 1802 of a saturated local parking mesh network 1806 detects an incoming sharing vehicle 1810 and send the information of the detected incoming sharing vehicle 1810 to a backend control center 1804 through the saturated local parking mesh network 1806. The backend control center 1804 may generate a command message based on a congestion state of the saturated local parking mesh network 1806 and send a command message to the incoming sharing vehicle 1810. The command message may comprise information of a non-saturated local parking mesh network 1808 in which the incoming sharing vehicle can be parked. Then the incoming sharing vehicle 1810 can be parked in the non-saturated local parking mesh network 1808.

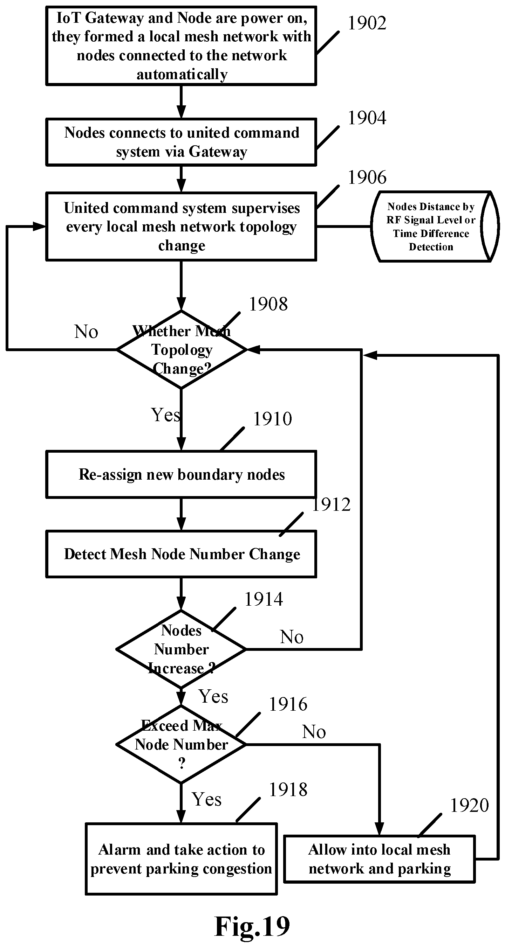

Fig. 19 is a flow chart depicting a method for sharing vehicle parking congestion prevention according to another embodiment of the present disclosure. For some parts which have been described in the above embodiments, detailed description thereof is omitted here for brevity.

As shown in Fig.19, at block 1902, when IoT Gateway and Node are power on, they may form a local mesh network with nodes connected to the network automatically. For example, when the nodes are powered on, they automatically connected to the local mesh network. When the node number is equal or more than four, the control center can dynamically assign at least 4 reference boundary nodes in the local mesh network.

At block 1904, nodes connects to a united command system such as the control center via a gateway such as the coordinator.

At block 1906, the united command system supervises every local mesh network topology change.

At block 1908, the united command system determines whether the mesh network topology is changed or not.

At block 1910, if the mesh network topology changes, the united command system re-assigns new boundary nodes. For example, the distance of router nodes (vehicle) to the gateway may be estimated by the signal level of RF RSSI value. The control center may check whether reference boundary nodes distribution shape is normal or not by a predetermined metric e.g. maximize area covered. If not, new reference boundary nodes will be assigned dynamically. If the mesh network topology does not change, the process goes back to block 1908.

At block 1912, the united command system detects mesh network node number change.

At block 1914, the united command system determines whether the number of nodes increases or not.

At block 1916, if the number of nodes increases, the united command system determines whether the number of nodes exceeds max node number or not. If the number of nodes does not increase, the process goes back to block 1908.

At block 1918, if the number of nodes exceeds the max node number, the united command system may alarm and take action to prevent parking congestion. For example, the united command system may send a command massage comprising information of rejecting the incoming sharing vehicle to be parked in the local mesh network.

At block 1920, if the number of nodes does not exceed the max node number, the united command system may allow the incoming sharing vehicle to be parked into the local mesh network. Then the process may return to block 1908.

For example, when valid reference boundary nodes are selected, they start to work. They may check incoming or existing node's RF signal level e.g. RSSI. And they may send the coordinate information of the incoming or existing node back to the control center to describe the sensed scale and whether the number of nodes is beyond the upper node number limit of the local mesh area. Then decision will be made to allow or forbid the incoming nodes to avoid parking jam. If the incoming nodes exceed the upper limit, the incoming sharing vehicle are not allowed to be locked or parked in the local mesh area and the user is alarmed to change to another parking place, which can park the incoming sharing vehicle.

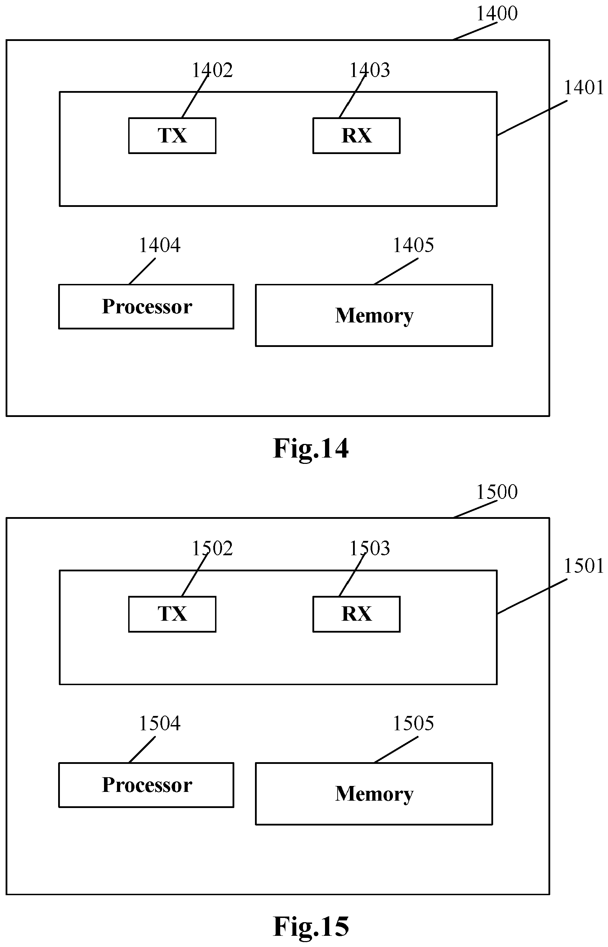

Fig.14 depicts an apparatus capable of preventing sharing vehicle parking congestion as described above, wherein the apparatus may be implemented by or included in the first node of the parking wireless network. As shown in Fig.14, the apparatus 1400 comprises a processing device 1404, a memory 1405, and a transceiver 1401 in operative communication with the processor 1404. The transceiver 1401 comprises at least one transmitter 1402 and at least one receiver 1403. While only one processor is illustrated in Fig.14, the processing device 1404 may comprises a plurality of processors or multi-core processor(s). Additionally, the processing device 1404 may also comprise cache to facilitate processing operations.

Computer-executable instructions can be loaded in the memory 1405 and, when executed by the processing device 1404, cause the apparatus 1400 to implement the above-described methods for preventing sharing vehicle parking congestion. In particular, the computer-executable instructions can cause the apparatus 1400 to detect an incoming sharing vehicle, wherein the parking wireless network corresponds to a parking lot/region, and the first node or a second node of the parking wireless network is the sharing vehicle or a coordinator; and wherein a command message is sent to the incoming sharing vehicle, and the command message is generated basing on a congestion state of the parking wireless network.

In an embodiment, the command message is stored in the first node and the apparatus 1400 is further configured to send the command message to the incoming sharing vehicle.

In an embodiment, the apparatus 1400 is further configured to determine the congestion state of the parking wireless network; generate the command message based on the congestion state; and send the command message to the incoming sharing vehicle.

In an embodiment, the congestion state of the parking wireless network is determined by the second node of the parking wireless network, and the apparatus 1500 is further configured to receive the congestion state from the second node, generate the command message based on the congestion state and send the command message to the incoming sharing vehicle.

In an embodiment, the congestion state of the parking wireless network is determined by a control center of the parking wireless network, and the apparatus 1400 is further configured to receive the congestion state from the control center, generate the command message based on the congestion state and send the command message to the incoming sharing vehicle.

In an embodiment, the congestion state of the parking wireless network is determined by a control center of the parking wireless network and the command message is generated by the control center and the apparatus 1400 is further configured to receive the command message from the control center and send the command message to the incoming sharing vehicle.

Fig.15 depicts an apparatus capable of preventing sharing vehicle parking congestion as described above, wherein the apparatus may be implemented by or included in the second node of the parking wireless network. As shown in Fig. 15, the apparatus 1500 comprises a processing device 1504, a memory 1505, and a transceiver 1501 in operative communication with the processor 1504. The transceiver 1501 comprises at least one transmitter 1502 and at least one receiver 1503. While only one processor is illustrated in Fig.15, the processing device 1504 may comprises a plurality of processors or multi-core processor(s). Additionally, the processing device 1504 may also comprise cache to facilitate processing operations.

Computer-executable instructions can be loaded in the memory 1505 and, when executed by the processing device 1504, cause the apparatus 1500 to implement the above-described methods for preventing sharing vehicle parking congestion. In particular, the computer-executable instructions can cause the apparatus 1500 to determine the congestion state of the parking wireless network, wherein the congestion state is used to generate a command message and the command message is sent to an incoming sharing vehicle which is detected by a first node of the parking wireless network, wherein the parking wireless network corresponds to a parking lot/region, and the first node or a second node of the parking wireless network is the sharing vehicle or a coordinator.

In an embodiment, the apparatus 1500 is further configured to generate the command message based on the congestion state and send the command message to the incoming sharing vehicle.

In an embodiment, the apparatus 1500 is further configured to send the congestion state to the first node such that the first node generates the command message based on the congestion state and sends the command message to the incoming sharing vehicle.

In an embodiment, the congestion state of the parking wireless network is determined by the control center of the parking wireless network, and the apparatus 1500 is further configured to receive the congestion state from the control center, generate the command message based on the congestion state and send the command message to the incoming sharing vehicle, or send the congestion state to the first node such that the first node generates the command message based on the congestion state and sends the command message to the incoming sharing vehicle.

In an embodiment, the congestion state of the parking wireless network is determined by a control center of the parking wireless network and the command message is generated by the control center and the apparatus 1500 is further configured to receive the command message from the control center and send the command message to the incoming sharing vehicle.

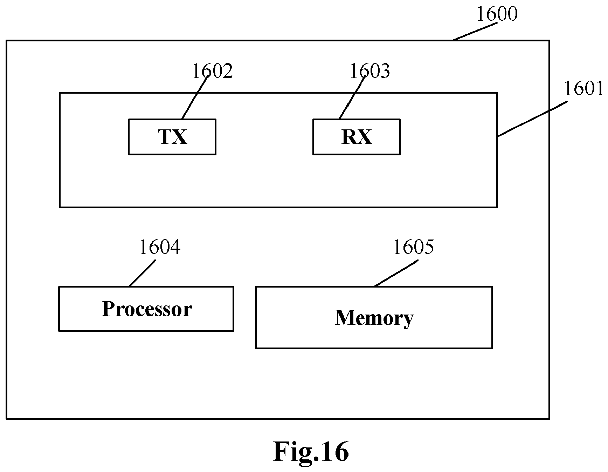

Fig.16 depicts an apparatus capable of preventing sharing vehicle parking congestion as described above, wherein the apparatus may be implemented by or included in the control center. As shown in Fig.16, the apparatus 1600 comprises a processing device 1604, a memory 1605, and a transceiver 1601 in operative communication with the processor 1604. The transceiver 1601 comprises at least one transmitter 1602 and at least one receiver 1603. While only one processor is illustrated in Fig.16, the processing device 1604 may comprises a plurality of processors or multi-core processor(s). Additionally, the processing device 1604 may also comprise cache to facilitate processing operations.

Computer-executable instructions can be loaded in the memory 1605 and, when executed by the processing device 1604, cause the apparatus 1600 to implement the above-described methods for preventing sharing vehicle parking congestion. In particular, the computer-executable instructions can cause the apparatus 1600 to determine the congestion state of the parking wireless network, wherein the congestion state is used to generate a command message and the command message is sent to an incoming sharing vehicle which is detected by the first node of the parking wireless network.

In an embodiment, the apparatus 1600 is further configured to send the congestion state to a first node of the parking wireless network such that the first node generates the command message based on the congestion state and sends the command message to the incoming sharing vehicle; or send the congestion state to a second node of the parking wireless network such that the second node generates the command message based on the congestion state and send the command message to the incoming sharing vehicle; or send the congestion state to the second node such that the second node forwards the congestion state to the first node which generates the command message based on the congestion state and sends the command message to the incoming sharing vehicle.

In an embodiment, the apparatus 1600 is further configured to obtain sharing vehicle parking information and a sharing vehicle distribution; optimize at least one parking area according to the sharing vehicle parking information and the sharing vehicle distribution; and manage the sharing vehicles.

In an embodiment, the apparatus 1600 is further configured to generate the command message based on the congestion state; and send the command message to the incoming sharing vehicle.

According to an aspect of the disclosure it is provided an apparatus capable of implementing the methods for preventing sharing vehicle parking congestion as described above, wherein the apparatus may be implemented by or included in the first node of the parking wireless network.

In an embodiment, the apparatus comprises a detecting unit configured to detect an incoming sharing vehicle, wherein the parking wireless network corresponds to a parking lot/region, and the first node or a second node of the parking wireless network is the sharing vehicle or a coordinator; and wherein a command message is sent to the incoming sharing vehicle, and the command message is generated basing on a congestion state of the parking wireless network.

In an embodiment, the command message is stored in the first node and the apparatus further comprises a sending unit configured to send the command message to the incoming sharing vehicle.

In an embodiment, the apparatus further comprise a determining unit configured to determine the congestion state of the parking wireless network; a generating unit configured to generate the command message based on the congestion state; and the sending unit further configured to send the command message to the incoming sharing vehicle.

In an embodiment, the congestion state of the parking wireless network is determined by a control center of the parking wireless network, and the apparatus further comprise a receiving unit configured to receive the congestion state from the control center, a generating unit configured to generate the command message based on the congestion state and the sending unit further configured to send the command message to the incoming sharing vehicle.

In an embodiment, the congestion state of the parking wireless network is determined by the control center of the parking wireless network, and the apparatus further comprises the receiving unit further configured to receive the congestion state from the control center, the generating unit further configured to generate the command message based on the congestion state and a send unit configured to send the command message to the incoming sharing vehicle, or the sending unit further configured to send the congestion state to the first node such that the first node generates the command message based on the congestion state and sends the command message to the incoming sharing vehicle.

In an embodiment, the congestion state of the parking wireless network is determined by a control center of the parking wireless network and the command message is generated by the control center and the apparatus further comprises a receiving unit configured to receive the command message from the control center and a sending unit configured to send the command message to the incoming sharing vehicle; or the receiving unit configured to receive the command message from the control center and the sending unit configured to send the command message to the incoming sharing vehicle.

According to another aspect of the disclosure it is provided an apparatus capable of implementing the methods for preventing sharing vehicle parking congestion as described above, wherein the apparatus may be implemented by or included in the second node of the parking wireless network.

In an embodiment, the apparatus comprises a determining unit configured to determine the congestion state of the parking wireless network, a generating unit configured to generate the command message based on the congestion state and a sending unit configured to send the command message to the incoming sharing vehicle.

In an embodiment, the apparatus comprises a determining unit configured to determine the congestion state of the parking wireless network and a sending unit configured to send the congestion state to the first node such that the first node generates the command message based on the congestion state and sends the command message to the incoming sharing vehicle.

In an embodiment, the congestion state of the parking wireless network is determined by the control center of the parking wireless network, and the apparatus further comprise a receiving unit configured to receive the congestion state from the control center, a generating unit configured to generate the command message based on the congestion state and a sending unit configured to send the command message to the incoming sharing vehicle, or a sending unit configured to send the congestion state to the first node such that the first node generates the command message based on the congestion state and sends the command message to the incoming sharing vehicle.

In an embodiment, the congestion state of the parking wireless network is determined by the control center of the parking wireless network and the command message is generated by the control center and the apparatus further comprising a receiving unit configured to receive the command message from the control center and a sending unit configured to send the command message to the incoming sharing vehicle.

According to another aspect of the disclosure it is provided an apparatus capable of implementing the methods for preventing sharing vehicle parking congestion as described above, wherein the apparatus may be implemented by or included in the control center of the parking wireless network.

In an embodiment, the apparatus comprise a determining unit configured to determine a congestion state of a parking wireless network, wherein the congestion state is used to generate a command message and the command message is sent to an incoming sharing vehicle which is detected by the first node of the parking wireless network.

In an embodiment, the apparatus comprises a sending unit configured to send the congestion state to a first node of the parking wireless network such that the first node generates the command message based on the congestion state and sends the command message to the incoming sharing vehicle; or a sending unit configured to send the congestion state to a second node of the parking wireless network such that the second node generates the command message based on the congestion state and send the command message to the incoming sharing vehicle; or a sending unit configured to send the congestion state to the second node such that the second node forwards the congestion state to the first node which generates the command message based on the congestion state and sends the command message to the incoming sharing vehicle.

In an embodiment, the apparatus comprises a generating unit configured to generate the command message based on the congestion state; and a sending unit configured to send the command message to the incoming sharing vehicle.

In an embodiment, the command message comprises at least one information of allowing the incoming sharing vehicle to be parked in the parking wireless network if the parking wireless network is not congested; rejecting the incoming sharing vehicle to be parked in the parking wireless network if the parking wireless network is congested; charging more fees for parking the incoming sharing vehicle in the parking wireless network if the parking wireless network is congested; requiring a user of the incoming sharing vehicle to perform a specific action if the incoming sharing vehicle is parked in the parking wireless network if the parking wireless network is congested; and information of at least one near other parking wireless network in which the incoming sharing vehicle can be parked if the parking wireless network is congested.

In an embodiment, the apparatus further comprises an obtaining unit configured to obtain sharing vehicle parking information and a sharing vehicle distribution; an optimizing unit configured to optimize at least one parking area according to the sharing vehicle parking information and the sharing vehicle distribution; and a manage unit configured to manage the sharing vehicles.

In an embodiment, the first node is a boundary node of the parking wireless network and the boundary node is reassigned when a topology of the parking wireless network changes.

In an embodiment, the parking wireless network is an ad hoc mesh network.

In an embodiment, the congestion state is determined based on a comparison of the number of current nodes in the parking wireless network and a threshold.

According to an aspect of the disclosure it is provided a computer program product comprising at least one non-transitory computer-readable storage medium having computer-executable program instructions stored therein, the computer-executable instructions being configured to, when being executed, cause an apparatus to operate as described above.

According to an aspect of the disclosure it is provided a computer readable storage medium comprising instructions which when executed by at least one processor, cause the at least one processor to perform the method as described above.

The embodiments of the disclosure may have the following advantages. The embodiments of the disclosure can save the local labor resource to manage the parking congestion issue and can prevent sharing vehicle parking congestion. By using the Ad Hoc network, the dynamic control and management of the parking wireless network can real-time adjust the parking strategy and regulating parking behavior of the sharing vehicles. The embodiments of the disclosure can realize smart parking by using network technology. The embodiments of the disclosure can use low power IoT(Internet of Thing) senor and network technology, which can save great energy resource which is more beneficial for sharing vehicle maintenance. The embodiments of the disclosure can provide a united control system, the decision made can be passed to every node in the parking wireless network and the node can share the parking situation to other nodes and back to control center. The embodiments of the disclosure can monitor multiple incoming sharing bikes to be parked and judge whether they will cause local parking congestion in advance for prevention. Autonomous parking congestion prevention can be implemented by auto-decision making for vehicle lock-disable and alarm for parking congestions. The Ad Hoc network is low cost, flexible and simple for deployment, easy for widely deployment.

It is noted that any of the components of the network device and terminal device can be implemented as hardware or software modules. In the case of software modules, they can be embodied on a tangible computer-readable recordable storage medium. All of the software modules (or any subset thereof) can be on the same medium, or each can be on a different medium, for example. The software modules can run, for example, on a hardware processor. The method steps can then be carried out using the distinct software modules, as described above, executing on a hardware processor.

The terms "computer program", "software" and "computer program code" are meant to include any sequences or human or machine cognizable steps which perform a function. Such program may be rendered in virtually any programming language or environment including, for example, C/C++, Fortran, COBOL, PASCAL, assembly language, markup languages (e.g., HTML, SGML, XML), and the like, as well as object-oriented environments such as the Common Object Request Broker Architecture (CORBA), JavaTM (including J2ME, Java Beans, etc.), Binary Runtime Environment (BREW), and the like.

The terms "memory" and "storage device" are meant to include, but not limited to, an electronic, magnetic, optical, electromagnetic, infrared, or semiconductor system, apparatus, or device, or any suitable combination of the foregoing. More specific examples (a non-exhaustive list) of the memory or storage device would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

In any case, it should be understood that the components illustrated herein may be implemented in various forms of hardware, software, or combinations thereof, for example, application specific integrated circuit(s) (ASICS), functional circuitry, an appropriately programmed general purpose digital computer with associated memory, and the like. Given the teachings of the disclosure provided herein, one of ordinary skill in the related art will be able to contemplate other implementations of the components of the disclosure.

The descriptions of the various embodiments have been presented for purposes of illustration, but are not intended to be exhaustive or limited to the embodiments disclosed. Many modifications and variations will be apparent to those of ordinary skill in the art without departing from the scope of the described embodiments.

## Claims

1. A method (200, 300, 400, 500, 600, 700, 800, 900, 1000, 1100) for preventing sharing vehicle parking congestion, performed in at least a node of a parking wireless network,
wherein a sharing vehicle and a coordinator (102) in a parking region (170) form the parking wireless network such as ad hoc mesh network and
wherein each sharing vehicle and the coordinator (102) are deemed as a node in the parking wireless network;
the method comprising:
detecting (202, 302, 402, 502, 602, 702, 802, 902, 1002, 1102), by a first node, an incoming sharing vehicle; and
wherein a command message comprising parking-related information is sent to the incoming sharing vehicle, and the command message is generated based on a congestion state of the parking wireless network.

2. The method according to claim 1, further comprising
determining (404), by the first node, the congestion state;
generating (406), by the first node, the command message based on the congestion state; and
sending (408), by the first node, the command message to the incoming sharing vehicle.

3. The method according to claim 1, wherein the congestion state of the parking wireless network is determined (504, 604) by a second node of the parking wireless network and the method further comprising:
at the second node, generating (606) the command message based on the congestion state and sending (608) the command message to the incoming sharing vehicle; or
at the second node, sending (506) the congestion state to the first node such that the first node generates (508) the command message based on the congestion state and sends (510) the command message to the incoming sharing vehicle.

4. The method according to claim 1, wherein the congestion state of the parking wireless network is determined by a control center of the parking wireless network and the method further comprising:
at the first node, receiving (704) the congestion state from the control center, generating (706) the command message based on the congestion state and sending (708) the command message to the incoming sharing vehicle; or
at a second node of the parking wireless network, receiving (804, 904) the congestion state from the control center, generating (906) the command message based on the congestion state and sending (908) the command message to the incoming sharing vehicle, or sending (806) the congestion state to the first node such that the first node generates (808) the command message based on the congestion state and sends (810) the command message to the incoming sharing vehicle.

5. The method according to claim 1, wherein the congestion state of the parking wireless network is determined by a control center of the parking wireless network and the command message is generated by the control center and the method further comprising:
at the first node, receiving (1004) the command message from the control center and sending (1006) the command message to the incoming sharing vehicle; or
at a second node of the parking wireless network, receiving (1104) the command message from the control center and sending (1106) the command message to the incoming sharing vehicle.

6. The method according to any one of claims 1-5, wherein the command message comprises at least one information of :
allowing the incoming sharing vehicle to be parked in the parking wireless network if the parking wireless network is not congested;
rejecting the incoming sharing vehicle to be parked in the parking wireless network if the parking wireless network is congested;
charging more fees for parking the incoming sharing vehicle in the parking wireless network if the parking wireless network is congested;
requiring a user of the incoming sharing vehicle to perform a specific action if the incoming sharing vehicle is parked in the parking wireless network if the parking wireless network is congested; and
information of at least one neighbouring parking wireless network in which the incoming sharing vehicle can be parked if the parking wireless network is congested.

7. The method according to any one of claims 1-6, wherein the first node is a boundary node of the parking wireless network, and the boundary node is reassigned when a topology of the parking wireless network changes; and/or
wherein the congestion state is determined based on a comparison of the number of current nodes in the parking wireless network and a threshold; and/or wherein the parking wireless network is an ad hoc mesh network.

8. A method (1200, 1300) for preventing sharing vehicle parking congestion, performed in a control center of a parking wireless network,
wherein the parking wireless network corresponds to a parking lot/region, and a sharing vehicle and a coordinator (102) in the parking region (170) form the parking wireless network such as ad hoc mesh network and each sharing vehicle and the coordinator (102) are deemed as a node in the parking wireless network,
the method comprising:
by the control center,
determining (1202, 1302) a congestion state of the parking wireless network, and
sending the congestion state to at least a node of the parking wireless network,
wherein the congestion state is used to generate a command message comprising parking-related information; and the command message is sent to an incoming sharing vehicle which is detected by a first node of the parking wireless network.

9. The method according to claim 8, further comprising:
sending (1204) the congestion state to the first node of the parking wireless network such that the first node generates the command message based on the congestion state and sends the command message to the incoming sharing vehicle; or
sending (1206) the congestion state to a second node of the parking wireless network such that the second node generates the command message based on the congestion state and send the command message to the incoming sharing vehicle; or sending (1208) the congestion state to a second node such that the second node forwards the congestion state to the first node which generates the command message based on the congestion state and sends the command message to the incoming sharing vehicle.

10. The method according to claim 8, further comprising:
generating (1304) the command message based on the congestion state; and
sending (1306) the command message to the incoming sharing vehicle.

11. The method according to any one of claims 8-10, wherein the command message comprises at least one information of :
allowing the incoming sharing vehicle to be parked in the parking wireless network if the parking wireless network is not congested;
rejecting the incoming sharing vehicle to be parked in the parking wireless network if the parking wireless network is congested;
charging more fees for parking the incoming sharing vehicle in the parking wireless network if the parking wireless network is congested;
requiring a user of the incoming sharing vehicle to perform a specific action if the incoming sharing vehicle is parked in the parking wireless network if the parking wireless network is congested; and
information of at least one near other parking wireless network in which the incoming sharing vehicle can be parked if the parking wireless network is congested.

12. The method according to any one of claims 8-11, further comprising
obtaining sharing vehicle parking information and a sharing vehicle distribution;
optimizing at least one parking area according to the sharing vehicle parking information and the sharing vehicle distribution; and
managing the sharing vehicles.

13. The method according to any one of claims 8-12, wherein the first node is a boundary node of the parking wireless network and the boundary node is reassigned when a topology of the parking wireless network changes; and/or
wherein the parking wireless network is an ad hoc mesh network; and/or
wherein the congestion state is determined based on a comparison of the number of current nodes in the parking wireless network and a threshold.

14. An apparatus (1400) for preventing sharing vehicle parking congestion, comprising:
a processor (1404); and
a memory (1405), the memory (1405) containing instructions executable by the processor (1404), whereby the apparatus (1400) is operative to perform the method 10 according to any one of claims 1-7.

15. An apparatus (1500) for preventing sharing vehicle parking congestion, comprising:
a processor (1504); and
a memory (1505), the memory (1505) containing instructions executable by the processor (1504), whereby the apparatus (1500) is operative to perform the method according to any one of claims 8-13.

## Patentansprüche

1. Verfahren (200, 300, 400, 500, 600, 700, 800, 900, 1000, 1100) zur Verhinderung von Überlastung beim Parken von gemeinsam genutzten Fahrzeugen,
das in mindestens einem Knoten eines drahtlosen Parknetzwerks durchgeführt wird,
wobei ein gemeinsam genutztes Fahrzeug und ein Koordinator (102) in einem Parkbereich (170) das drahtlose Parknetzwerk, wie etwa ein Ad-hoc-Mesh-Netzwerk, bilden und wobei jedes gemeinsam genutzte Fahrzeug und der Koordinator (102) als ein Knoten in dem drahtlosen Parknetzwerk erachtet werden;
wobei das Verfahren umfasst:
Erfassen (202, 302, 402, 502, 602, 702, 802, 902, 1002, 1102) eines ankommenden gemeinsam genutzten Fahrzeugs durch einen ersten Knoten; und
wobei eine Befehlsnachricht, die parkbezogene Informationen umfasst, an das ankommende gemeinsam genutzte Fahrzeug gesendet wird und die Befehlsnachricht basierend auf einem Überlastungszustand des drahtlosen Parknetzwerks erzeugt wird.

2. Verfahren nach Anspruch 1, weiter umfassend
Bestimmen (404) des Überlastungszustands durch den ersten Knoten;
Erzeugen (406) der Befehlsnachricht basierend auf dem Überlastungszustand durch den ersten Knoten; und
Senden (408) der Befehlsnachricht an das ankommende gemeinsam genutzte Fahrzeug durch den ersten Knoten.

3. Verfahren nach Anspruch 1, wobei der Überlastungszustand des drahtlosen Parknetzwerks durch einen zweiten Knoten des drahtlosen Parknetzwerks bestimmt (504, 604) wird und das Verfahren weiter umfasst:
bei dem zweiten Knoten, Erzeugen (606) der Befehlsnachricht basierend auf dem Überlastungszustand und Senden (608) der Befehlsnachricht an das ankommende gemeinsam genutzte Fahrzeug; oder
bei dem zweiten Knoten, Senden (506) des Überlastungszustands an den ersten Knoten, so dass der erste Knoten die Befehlsnachricht basierend auf dem Überlastungszustand erzeugt (508) und die Befehlsnachricht an das ankommende gemeinsam genutzte Fahrzeug sendet (510).

4. Verfahren nach Anspruch 1, wobei der Überlastungszustand des drahtlosen Parknetzwerks durch ein Kontrollzentrum des drahtlosen Parknetzwerks bestimmt wird und das Verfahren weiter umfasst:
bei dem ersten Knoten, Empfangen (704) des Überlastungszustands von dem Kontrollzentrum, Erzeugen (706) der Befehlsnachricht basierend auf dem Überlastungszustand und Senden (708) der Befehlsnachricht an das ankommende gemeinsam genutzte Fahrzeug; oder
bei einem zweiten Knoten des drahtlosen Parknetzwerks, Empfangen (804, 904) des Überlastungszustands von dem Kontrollzentrum, Erzeugen (906) der Befehlsnachricht basierend auf dem Überlastungszustand und Senden (908) der Befehlsnachricht an das ankommende gemeinsam genutzte Fahrzeug, oder Senden (806) des Überlastungszustands an den ersten Knoten, so dass der erste Knoten die Befehlsnachricht basierend auf dem Überlastungszustand erzeugt (808) und die Befehlsnachricht an das ankommende gemeinsam genutzte Fahrzeug sendet (810).

5. Verfahren nach Anspruch 1, wobei der Überlastungszustand des drahtlosen Parknetzwerks durch ein Kontrollzentrum des drahtlosen Parknetzwerks bestimmt wird und die Befehlsnachricht durch das Kontrollzentrum erzeugt wird und das Verfahren weiter umfasst:
bei dem ersten Knoten, Empfangen (1004) der Befehlsnachricht vom Kontrollzentrum und Senden (1006) der Befehlsnachricht an das ankommende gemeinsam genutzte Fahrzeug; oder
bei einem zweiten Knoten des drahtlosen Parknetzwerks, Empfangen (1104) der Befehlsnachricht vom Kontrollzentrum und Senden (1106) der Befehlsnachricht an das ankommende gemeinsam genutzte Fahrzeug.

6. Verfahren nach einem der Ansprüche 1-5, wobei die Befehlsnachricht mindestens eine der folgenden Informationen umfasst:
Ermöglichen, dass das ankommende gemeinsam genutzte Fahrzeug im drahtlosen Parknetzwerk geparkt wird, wenn das drahtlose Parknetzwerk nicht überlastet ist;
Ablehnen, dass das ankommende gemeinsam genutzte Fahrzeug im drahtlosen Parknetzwerk geparkt wird, wenn das drahtlose Parknetzwerk überlastet ist;
Erheben höherer Gebühren für das Parken des ankommenden gemeinsam genutzten Fahrzeugs im drahtlosen Parknetzwerk, wenn das drahtlose Parknetzwerk überlastet ist;
Auffordern eines Benutzers des ankommenden gemeinsam genutzten Fahrzeugs, eine bestimmte Aktion durchzuführen, falls das ankommende gemeinsam genutzte Fahrzeug im drahtlosen Parknetzwerk geparkt ist, wenn das drahtlose Parknetzwerk überlastet ist; und
Informationen zu mindestens einem benachbarten drahtlosen Parknetzwerk, in dem das ankommende gemeinsam genutzte Fahrzeug geparkt werden kann, wenn das drahtlose Parknetzwerk überlastet ist.

7. Verfahren nach einem der Ansprüche 1-6, wobei der erste Knoten ein Randknoten des drahtlosen Parknetzwerks ist und der Randknoten neu zugewiesen wird, wenn sich eine Topologie des drahtlosen Parknetzwerks ändert; und/oder
wobei der Überlastungszustand basierend auf einem Vergleich der Anzahl aktueller Knoten im drahtlosen Parknetzwerk und einem Schwellenwert bestimmt wird; und/oder wobei das drahtlose Parknetzwerk ein Ad-hoc-Mesh-Netzwerk ist.

8. Verfahren (1200, 1300) zur Verhinderung von Überlastung beim Parken von gemeinsam genutzten Fahrzeugen, das in einem Kontrollzentrum eines drahtlosen Parknetzwerks durchgeführt wird,
wobei das drahtlose Parknetzwerk einem Parkp!atz/-bereich entspricht und ein gemeinsam genutztes Fahrzeug und ein Koordinator (102) in dem Parkbereich (170) das drahtlose Parknetzwerk, wie etwa ein Ad-hoc-Mesh-Netzwerk, bilden und jedes gemeinsam genutzte Fahrzeug und der Koordinator (102) als ein Knoten in dem drahtlosen Parknetzwerk erachtet werden,
wobei das Verfahren umfasst:
durch das Kontrollzentrum,
Bestimmen (1202, 1302) eines Überlastungszustands des drahtlosen Parknetzwerks und Senden des Überlastungszustands an mindestens einen Knoten des drahtlosen Parknetzwerks,
wobei der Überlastungszustand verwendet wird, um eine Befehlsnachricht zu erzeugen, die parkbezogene Informationen umfasst; und die Befehlsnachricht an ein ankommendes gemeinsam genutztes Fahrzeug gesendet wird, das von einem ersten Knoten des drahtlosen Parknetzwerks erfasst wird.

9. Verfahren nach Anspruch 8, weiter umfassend:
Senden (1204) des Überlastungszustands an den ersten Knoten des drahtlosen Parknetzwerks, so dass der erste Knoten die Befehlsnachricht basierend auf dem Überlastungszustand erzeugt und die Befehlsnachricht an das ankommende gemeinsam genutzte Fahrzeug sendet; oder
Senden (1206) des Überlastungszustands an einen zweiten Knoten des drahtlosen Parknetzwerks, so dass der zweite Knoten die Befehlsnachricht basierend auf dem Überlastungszustand erzeugt und die Befehlsnachricht an das ankommende gemeinsam genutzte Fahrzeug sendet; oder Senden (1208) des Überlastungszustands an einen zweiten Knoten, so dass der zweite Knoten den Überlastungszustand an den ersten Knoten weiterleitet, der die Befehlsnachricht basierend auf dem Überlastungszustand erzeugt und die Befehlsnachricht an das ankommende gemeinsam genutzte Fahrzeug sendet.

10. Verfahren nach Anspruch 8, weiter umfassend:
Erzeugen (1304) der Befehlsnachricht basierend auf dem Überlastungszustand; und
Senden (1306) der Befehlsnachricht an das ankommende gemeinsam genutzte Fahrzeug.

11. Verfahren nach einem der Ansprüche 8-10, wobei die Befehlsnachricht mindestens eine der folgenden Informationen umfasst:
Ermöglichen, dass das ankommende gemeinsam genutzte Fahrzeug im drahtlosen Parknetzwerk geparkt wird, wenn das drahtlose Parknetzwerk nicht überlastet ist;
Ablehnen, dass das ankommende gemeinsam genutzte Fahrzeug im drahtlosen Parknetzwerk geparkt wird, wenn das drahtlose Parknetzwerk überlastet ist;
Erheben höherer Gebühren für das Parken des ankommenden gemeinsam genutzten Fahrzeugs im drahtlosen Parknetzwerk, wenn das drahtlose Parknetzwerk überlastet ist;
Auffordern eines Benutzers des ankommenden gemeinsam genutzten Fahrzeugs, eine bestimmte Aktion durchzuführen, falls das ankommende gemeinsam genutzte Fahrzeug im drahtlosen Parknetzwerk geparkt ist, wenn das drahtlose Parknetzwerk überlastet ist; und
Informationen zu mindestens einem nahegelegenen anderen drahtlosen Parknetzwerk, in dem das ankommende gemeinsam genutzte Fahrzeug geparkt werden kann, wenn das drahtlose Parknetzwerk überlastet ist.

12. Verfahren nach einem der Ansprüche 8-11, weiter umfassend
Erhalten von Parkinformationen für gemeinsam genutzte Fahrzeuge und einer Verteilung gemeinsam genutzter Fahrzeuge;
Optimieren von mindestens einem Parkplatz gemäß den Parkinformationen gemeinsam genutzter Fahrzeuge und der Verteilung gemeinsam genutzter Fahrzeuge; und
Verwalten der gemeinsam genutzten Fahrzeuge.

13. Verfahren nach einem der Ansprüche 8-12, wobei der erste Knoten ein Randknoten des drahtlosen Parknetzwerks ist und der Randknoten neu zugewiesen wird, wenn sich eine Topologie des drahtlosen Parknetzwerks ändert; und/oder
wobei das drahtlose Parknetzwerk ein Ad-hoc-Mesh-Netzwerk ist; und/oder
wobei der Überlastungszustand basierend auf einem Vergleich der Anzahl aktueller Knoten im drahtlosen Parknetzwerk und einem Schwellenwert bestimmt wird.

14. Einrichtung (1400) zur Verhinderung von Überlastung beim Parken von gemeinsam genutzten Fahrzeugen, die Folgendes umfasst:
einen Prozessor (1404); und
einen Speicher (1405), wobei der Speicher (1405) Anweisungen enthält, die von dem Prozessor (1404) ausführbar sind, wodurch die Einrichtung (1400) betriebsfähig ist, das Verfahren 10 nach einem der Ansprüche 1-7 durchzuführen.

15. Einrichtung (1500) zur Verhinderung von Überlastung beim Parken von gemeinsam genutzten Fahrzeugen, die Folgendes umfasst:
einen Prozessor (1504); und
einen Speicher (1505), wobei der Speicher (1505) Anweisungen enthält, die von dem Prozessor (1504) ausführbar sind, wodurch die Einrichtung (1500) betriebsfähig ist, das Verfahren nach einem der Ansprüche 8-13 durchzuführen.

## Revendications

1. Procédé (200, 300, 400, 500, 600, 700, 800, 900, 1000, 1100) destiné à empêcher la congestion liée au stationnement de véhicules en libre-service,
effectué dans au moins un noeud d'un réseau de stationnement sans fil,
dans lequel un véhicule en libre-service et un coordinateur (102) dans une région de stationnement (170) forment le réseau de stationnement sans fil tel qu'un réseau maillé ad hoc et dans lequel chaque véhicule en libre-service et le coordinateur (102) sont considérés comme un noeud dans le réseau de stationnement sans fil ;
le procédé comprenant :
la détection (202, 302, 402, 502, 602, 702, 802, 902, 1002, 1102), par un premier noeud, d'un véhicule en libre-service entrant ; et
dans lequel un message de commande comprenant des informations relatives au stationnement est envoyé au véhicule en libre-service entrant, et le message de commande est généré sur la base d'un état de congestion du réseau de stationnement sans fil.

2. Procédé selon la revendication 1, comprenant en outre
la détermination (404), par le premier noeud, de l'état de congestion ;
la génération (406), par le premier noeud, du message de commande sur la base de l'état de congestion ; et
l'envoi (408), par le premier noeud, du message de commande au véhicule en libre-service entrant.

3. Procédé selon la revendication 1, dans lequel l'état de congestion du réseau de stationnement sans fil est déterminé (504, 604) par un second noeud du réseau de stationnement sans fil et le procédé comprenant en outre :
au niveau du second noeud, la génération (606) du message de commande sur la base de l'état de congestion et l'envoi (608) du message de commande au véhicule en libre-service entrant ; ou
au niveau du second noeud, l'envoi (506) de l'état de congestion au premier noeud de sorte que le premier noeud génère (508) le message de commande sur la base de l'état de congestion et envoie (510) le message de commande au véhicule en libre-service entrant.

4. Procédé selon la revendication 1, dans lequel l'état de congestion du réseau de stationnement sans fil est déterminé par un centre de commande du réseau de stationnement sans fil et le procédé comprenant en outre :
au niveau du premier noeud, la réception (704) de l'état de congestion en provenance du centre de commande, la génération (706) du message de commande sur la base de l'état de congestion et l'envoi (708) du message de commande au véhicule en libre-service entrant ; ou
au niveau d'un second noeud du réseau de stationnement sans fil, la réception (804, 904) de l'état de congestion en provenance du centre de commande, la génération (906) du message de commande sur la base de l'état de congestion et l'envoi (908) du message de commande au véhicule en libre-service entrant, ou l'envoi (806) de l'état de congestion au premier noeud de sorte que le premier noeud génère (808) le message de commande sur la base de l'état de congestion et envoie (810) le message de commande au véhicule en libre-service entrant.

5. Procédé selon la revendication 1, dans lequel l'état de congestion du réseau de stationnement sans fil est déterminé par un centre de commande du réseau de stationnement sans fil et le message de commande est généré par le centre de commande et le procédé comprenant en outre :
au niveau du premier noeud, la réception (1004) du message de commande en provenance du centre de commande et l'envoi (1006) du message de commande au véhicule en libre-service entrant ; ou
au niveau d'un second noeud du réseau de stationnement sans fil, la réception (1104) du message de commande en provenance du centre de commande et l'envoi (1106) du message de commande au véhicule en libre-service entrant.

6. Procédé selon l'une quelconque des revendications 1-5, dans lequel le message de commande comprend au moins une information concernant :
une autorisation de stationnement du véhicule en libre-service entrant dans le réseau de stationnement sans fil si le réseau de stationnement sans fil n'est pas congestionné ;
un refus de stationnement du véhicule en libre-service entrant dans le réseau de stationnement sans fil si le réseau de stationnement sans fil est congestionné ;
une facturation de frais supplémentaires pour garer le véhicule en libre-service entrant dans le réseau de stationnement sans fil si le réseau de stationnement sans fil est congestionné ;
une demande à un utilisateur du véhicule en libre-service entrant d'effectuer une action spécifique si le véhicule en libre-service entrant est garé dans le réseau de stationnement sans fil si le réseau de stationnement sans fil est congestionné ; et
des informations d'au moins un réseau de stationnement sans fil voisin dans lequel le véhicule en libre-service entrant peut être garé si le réseau de stationnement sans fil est congestionné.

7. Procédé selon l'une quelconque des revendications 1-6, dans lequel le premier noeud est un noeud limite du réseau de stationnement sans fil, et le noeud limite est réaffecté lorsqu'une topologie du réseau de stationnement sans fil change ; et/ou
dans lequel l'état de congestion est déterminé sur la base d'une comparaison du nombre de noeuds actuels dans le réseau de stationnement sans fil et d'un seuil ; et/ou dans lequel le réseau de stationnement sans fil est un réseau maillé ad hoc.

8. Procédé (1200, 1300) destiné à empêcher la congestion liée au stationnement de véhicules en libre-service, effectué dans un centre de commande d'un réseau de stationnement sans fil,
dans lequel le réseau de stationnement sans fil correspond à une aire/région de stationnement, et un véhicule en libre-service et un coordinateur (102) dans la région de stationnement (170) forment le réseau de stationnement sans fil tel qu'un réseau maillé ad hoc et chaque véhicule en libre-service et le coordinateur (102) sont considérés comme un noeud dans le réseau de stationnement sans fil,
le procédé comprenant :
par le centre de commande,
la détermination (1202, 1302) d'un état de congestion du réseau de stationnement sans fil, et l'envoi de l'état de congestion à au moins un noeud du réseau de stationnement sans fil,
dans lequel l'état de congestion est utilisé pour générer un message de commande comprenant des informations relatives au stationnement ; et le message de commande est envoyé à un véhicule en libre-service entrant qui est détecté par un premier noeud du réseau de stationnement sans fil.

9. Procédé selon la revendication 8, comprenant en outre :
l'envoi (1204) de l'état de congestion au premier noeud du réseau de stationnement sans fil de telle sorte que le premier noeud génère le message de commande sur la base de l'état de congestion et envoie le message de commande au véhicule en libre-service entrant ; ou
l'envoi (1206) de l'état de congestion à un second noeud du réseau de stationnement sans fil de telle sorte que le second noeud génère le message de commande sur la base de l'état de congestion et envoie le message de commande au véhicule en libre-service entrant ; ou l'envoi (1208) de l'état de congestion à un second noeud de telle sorte que le second noeud transmette l'état de congestion au premier noeud qui génère le message de commande sur la base de l'état de congestion et envoie le message de commande au véhicule en libre-service entrant.

10. Procédé selon la revendication 8, comprenant en outre :
la génération (1304) du message de commande sur la base de l'état de congestion ; et
l'envoi (1306) du message de commande au véhicule en libre-service entrant.

11. Procédé selon l'une quelconque des revendications 8-10, dans lequel le message de commande comprend au moins une information concernant :
une autorisation de stationnement du véhicule en libre-service entrant dans le réseau de stationnement sans fil si le réseau de stationnement sans fil n'est pas congestionné ;
un refus de stationnement du véhicule en libre-service entrant dans le réseau de stationnement sans fil si le réseau de stationnement sans fil est congestionné ;
une facturation de frais supplémentaires pour garer le véhicule en libre-service entrant dans le réseau de stationnement sans fil si le réseau de stationnement sans fil est congestionné ;
une demande à un utilisateur du véhicule en libre-service entrant d'effectuer une action spécifique si le véhicule en libre-service entrant est garé dans le réseau de stationnement sans fil si le réseau de stationnement sans fil est congestionné ; et
des informations d'au moins un autre réseau de stationnement sans fil à proximité dans lequel le véhicule en libre-service entrant peut être garé si le réseau de stationnement sans fil est congestionné.

12. Procédé selon l'une quelconque des revendications 8-11, comprenant en outre :
l'obtention d'informations de stationnement de véhicules en libre-service et d'une répartition de véhicules en libre-service ;
l'optimisation d'au moins une zone de stationnement en fonction des informations de stationnement de véhicules en libre-service et de la répartition de véhicules en libre-service ; et
la gestion des véhicules en libre-service.

13. Procédé selon l'une quelconque des revendications 8-12, dans lequel le premier noeud est un noeud limite du réseau de stationnement sans fil et le noeud limite est réaffecté lorsqu'une topologie du réseau de stationnement sans fil change ; et/ou
dans lequel le réseau de stationnement sans fil est un réseau maillé ad hoc ; et/ou
dans lequel l'état de congestion est déterminé sur la base d'une comparaison du nombre de noeuds actuels dans le réseau de stationnement sans fil et d'un seuil.

14. Appareil (1400) destiné à empêcher la congestion liée au stationnement de véhicules en libre-service, comprenant :
un processeur (1404) ; et
une mémoire (1405), la mémoire (1405) contenant des instructions exécutables par le processeur (1404), de telle manière que l'appareil (1400) soit fonctionnel pour effectuer le procédé 10 selon l'une quelconque des revendications 1-7.

15. Appareil (1500) destiné à empêcher la congestion liée au stationnement de véhicules en libre-service, comprenant :
un processeur (1504) ; et
une mémoire (1505), la mémoire (1505) contenant des instructions exécutables par le processeur (1504), de telle manière que l'appareil (1500) soit fonctionnel pour effectuer le procédé selon l'une quelconque des revendications 8-13.
